(19) **Europäisches Patentamt / European Patent Office / Office européen des brevets**

(11) **EP 4 585 660 A1**

(12) **EUROPEAN PATENT APPLICATION**
published in accordance with Art. 153(4) EPC

(43) Date of publication:
**16.07.2025 Bulletin 2025/29**

(21) Application number: **23863114.7**

(22) Date of filing: **01.09.2023**

(51) International Patent Classification (IPC):
*C09J 123/26* (2006.01)    *B32B 7/12* (2006.01)
*B32B 15/085* (2006.01)    *C09J 11/06* (2006.01)
*H01M 50/105* (2021.01)    *H01M 50/121* (2021.01)
*H01M 50/129* (2021.01)

(52) Cooperative Patent Classification (CPC):
**B32B 7/12; B32B 15/085; C09J 11/06;
C09J 123/26; H01M 50/105; H01M 50/121;
H01M 50/129; Y02E 60/10**

(86) International application number:
**PCT/JP2023/032070**

(87) International publication number:
**WO 2024/053576 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.09.2022 JP 2022143031**

(71) Applicant: **Mitsui Chemicals, Inc.
Tokyo 104-0028 (JP)**

(72) Inventors:
• **KAWABATA, Shun
  Sodegaura-shi, Chiba 299-0265 (JP)**
• **HIROTA, Yoshihito
  Sodegaura-shi, Chiba 299-0265 (JP)**

(74) Representative: **Hoffmann Eitle
Patent- und Rechtsanwälte PartmbB
Arabellastraße 30
81925 München (DE)**

(54) **ADHESIVE COMPOSITION, LAMINATE, PACKAGING MATERIAL, AND PACKAGING MATERIAL FOR BATTERY CASES**

(57)    An adhesive composition includes a crystalline modified olefin polymer, an acid anhydride monomer, and a cross-linking agent. The crystalline modified olefin polymer is obtained by modifying a crystalline $\alpha$-olefin polymer having 2 to 20 carbon atoms with a monomer having a functional group capable of reacting with an epoxy group or an oxazoline group. The acid anhydride monomer has a ring structure and two or more acid anhydride groups. The cross-linking agent includes an epoxy compound and/or an oxazoline compound.

FIG. 1

EP 4 585 660 A1

**Description**

TECHNICAL FIELD

The present invention relates to an adhesive composition, a laminate, a packaging material, and a packaging material for battery cases, in particular, to an adhesive composition, a laminate including an adhesive layer made of the adhesive composition, a packaging material including the laminate, and a packaging material for battery cases including the packaging material.

BACKGROUND ART

In recent years, lithium batteries have been used as batteries used for personal computers, portable terminal devices, and the like from the viewpoint of thinning. Lithium batteries are sealed with, for example, a packaging material.
Such a packaging material is obtained, for example, by bonding an aluminum foil layer and a polypropylene film with an adhesive.
As such an adhesive, for example, an adhesive composition containing a maleic anhydride-modified propylene-butene copolymer, an epoxy resin, and 1,2,3,6-tetrahydrophthalic anhydride has been proposed (for example, see Example 10 of Patent Document 1).

Citation List

Patent Document

Patent Document 1: International Publication WO2018/030050

SUMMARY OF THE INVENTION

PROBLEM TO BE SOLVED BY THE INVENTION

On the other hand, such an adhesive is required to have adhesion during a low-temperature lamination process from the viewpoint of improving productivity.
Such an adhesive is also required to have heat resistance.
The present invention provides an adhesive composition excellent in adhesion during a low-temperature lamination process and heat resistance, a laminate including an adhesive layer made of the adhesive composition, a packaging material including the laminate, and a packaging material for battery cases including the packaging material.

MEANS FOR SOLVING THE PROBLEM

The present invention [1] includes an adhesive composition including: a crystalline modified olefin polymer; an acid anhydride monomer; and a cross-linking agent, wherein the crystalline modified olefin polymer is obtained by modifying a crystalline α-olefin polymer having 2 to 20 carbon atoms with a monomer having a functional group capable of reacting with an epoxy group or an oxazoline group, wherein the acid anhydride monomer has a ring structure and two or more acid anhydride groups, and wherein the cross-linking agent includes an epoxy compound and/or an oxazoline compound.
The present invention [2] includes the adhesive composition described in the above-described [1], further including a non-crystalline hydrocarbon-based polymer having a kinematic viscosity at 200°C of 1 cSt or more and 100000 cSt or less.
The present invention [3] includes the adhesive composition described in the above-described [2], wherein the non-crystalline hydrocarbon-based polymer is a polymer of an olefin having 2 to 20 carbon atoms.
The present invention [4] includes the adhesive composition described in any one of the above-described [1] to [3], further including a catalyst.
The present invention [5] includes the adhesive composition described in the above-described [4], wherein the catalyst is an amine catalyst.
The present invention [6] includes the adhesive composition described in any one of the above-described [1] to [5], wherein the functional group is an acid anhydride group.
The present invention [7] includes a laminate including: a first adhesive layer made of the adhesive composition described in any one of the above-described [1] to [6]; and a substrate in order toward one side in a thickness direction.
The present invention [8] includes a packaging material including: an inner layer; and the laminate described in the above-described [7] in order toward one side in the thickness direction.

The present invention [9] includes a packaging material for battery cases including: the packaging material described in the above-described [8]; a second adhesive layer; and an outer layer in order toward one side in the thickness direction.

EFFECTS OF THE INVENTION

The adhesive composition of the present invention includes a crystalline modified olefin polymer, an acid anhydride monomer, and a cross-linking agent. Such an adhesive composition is cured by a cross-linking reaction between the crystalline modified olefin polymer, the acid anhydride monomer, and the cross-linking agent.

The acid anhydride monomer has two or more acid anhydride groups. Therefore, in the cross-linking reaction, the cross-link density is improved. As a result, the adhesion during a low-temperature lamination process is improved.

The acid anhydride monomer has a ring structure. As a result, the heat resistance is improved.

The laminate of the present invention includes a first adhesive layer made of the adhesive composition of the present invention. Therefore, excellent adhesion during a low-temperature lamination process and excellent heat resistance are achieved.

The packaging material of the present invention includes the laminate of the present invention. Therefore, excellent adhesion during a low-temperature lamination process and excellent heat resistance are achieved.

The packaging material for battery cases of the present invention includes the packaging material of the present invention. Therefore, excellent adhesion during a low-temperature lamination process and excellent heat resistance are achieved.

BRIEF DESCRIPTION OF THE DRAWINGS

FIG. 1 is a schematic view illustrating one embodiment of a laminate of the present invention.

FIGS. 2A and 2B illustrate one embodiment of the method of producing the laminate of the present invention. FIG. 2A shows a first step of preparing a substrate. FIG. 2B shows a second step of disposing (forming) a first adhesive layer on the other side of the substrate in the thickness direction.

FIG. 3 is a schematic view illustrating one embodiment of the packaging material of the present invention.

FIG. 4 is a schematic view showing one embodiment of a packaging material for battery cases of the present invention and a battery using the packaging material for battery cases.

DESCRIPTION OF THE EMBODIMENTS

1. Adhesive Composition

The adhesive composition includes a crystalline modified olefin polymer, an acid anhydride monomer, and a cross-linking agent.

<Crystalline Modified Olefin Polymer>

The crystalline modified olefin polymer is obtained by modifying a crystalline $\alpha$-olefin polymer having 2 to 20 carbon atoms with a monomer having a functional group capable of reacting with an epoxy group or an oxazoline group.

[Crystalline $\alpha$-olefin Polymer Having 2 to 20 Carbon Atoms]

The crystalline $\alpha$-olefin polymer having 2 to 20 carbon atoms is an olefin polymer containing a structural unit derived from an $\alpha$-olefin that has 2 to 20 carbon atoms and is capable of forming a crystalline polymer. In other words, the crystalline $\alpha$-olefin polymer having 2 to 20 carbon atoms is obtained by polymerizing an $\alpha$-olefin having 2 to 20 carbon atoms. The crystallinity is defined as a property of a compound having a heat of fusion (described later) of 1 J/g or more.

Examples of the $\alpha$-olefin having 2 to 20 carbon atoms include ethylene, propylene, **1-**butene, 1-pentene, 1-hexene, 4-methyl-1-pentene, 1-octene, 1-decene, 1-dodecene, 1-tetradecene, 1-hexadecene, 1-octadecene, and 1-eicosene.

The structural unit derived from an $\alpha$-olefin having 2 to 20 carbon atoms is preferably a structural unit derived from an $\alpha$-olefin having 2 to 4 carbon atoms. The structural unit derived from an $\alpha$-olefin having 2 to 20 carbon atoms is more preferably a structural unit derived from propylene and a structural unit derived from 1-butene. That is, the crystalline $\alpha$-

olefin polymer having 2 to 20 carbon atoms is preferably a propylene/1-butene copolymer.

Further, the type of the structural unit derived from an α-olefin having 2 to 20 carbon atoms, and the content ratio thereof are selected so that the olefin polymer is crystalline.

Specifically, when the structural unit derived from an α-olefin having 2 to 20 carbon atoms includes a structural unit derived from propylene and a structural unit derived from **1**-butene, the content ratio of the structural unit derived from propylene is, for example, 50 mol% or more, preferably 60 mol% or more, and for example, 95 mol% or less, preferably 85 mol% or less with respect to 100 mol% of the total amount of the structural unit derived from propylene and the structural unit derived from 1-butene. In addition, the content ratio of the structural unit derived from 1-butene is, for example, 5 mol % or more, preferably 15 mol % or more, and for example, 50 mol % or less, preferably 40 mol % or less with respect to 100 mol % of the total amount of the structural unit derived from propylene and the structural unit derived from 1-butene.

When the content ratio of the structural unit derived from propylene and the content ratio of the structural unit derived from 1-butene are the lower limit or more and the upper limit or less, excellent adhesion during a low-temperature lamination process is achieved.

The content ratios described above are confirmed, for example, by a known method such as $^{13}$C-NMR measurement (the same applies hereinafter).

The crystalline α-olefin polymer having 2 to 20 carbon atoms is obtained, for example, by the method described in JP patent No. 3939464 and WO2004/87775. Specifically, a crystalline α-olefin polymer having 2 to 20 carbon atoms can be obtained by polymerizing an α-olefin having 2 to 20 carbon atoms in the presence of a metallocene catalyst.

The crystalline α-olefin polymer having 2 to 20 carbon atoms has a heat of fusion of, for example, 1 J/g or more, preferably 10 J/g or more, more preferably 20 J/g or more, and for example, 50 J/g or less, preferably 40 J/g or less, which is measured in conformity to JIS K7122.

When the heat of fusion is the lower limit or more and the upper limit or less, excellent adhesion during a low-temperature lamination process is achieved.

The crystalline α-olefin polymer having 2 to 20 carbon atoms has a melting point of, for example, 40°C or more, preferably 60°C or more, and for example, 100°C or less, preferably 90°C or less.

The melting point can be measured by a differential scanning calorimeter (the same applies hereinafter).

The crystalline α-olefin polymer having 2 to 20 carbon atoms has a weight-average molecular weight of, for example, 10000 or more, preferably 50000 or more, and, for example, 500000 or less, preferably 400000 or less, which is measured by a GPC method (gel permeation chromatography method) and is converted into a standard polystyrene.

The crystalline α-olefin polymer having 2 to 20 carbon atoms may be used alone or in combination of two or more thereof.

[Monomer]

The monomer has a functional group capable of reacting with an epoxy group or an oxazoline group.

Examples of such a functional group include a hydroxyl group, an amino group, a carboxyl group, an acid anhydride group, an ester group, and a thiol group.

The monomer is a compound having the above-described functional group, and examples thereof include a hydroxyl group-containing ethylenically unsaturated compound, an amino group-containing ethylenically unsaturated compound, an unsaturated carboxylic acid, an unsaturated carboxylic acid anhydride, a vinyl ester compound, and a thiol group-containing ethylenically unsaturated compound.

The hydroxyl group-containing ethylenically unsaturated compound has a hydroxyl group as the above-described functional group. Examples of the hydroxyl group-containing ethylenically unsaturated compound include a hydroxyl group-containing (meth)acrylic acid ester. Examples of the hydroxyl group-containing (meth)acrylic acid ester include 2-hydroxyethyl (meth)acrylate and 2-hydroxypropyl (meth)acrylate.

The amino group-containing ethylenically unsaturated compound has an amino group as the above-described functional group. Examples of the amino group-containing ethylenically unsaturated compound include aminomethyl (meth)acrylate and propylaminoethyl (meth)acrylate.

The unsaturated carboxylic acid has a carboxyl group as the above-described functional group. Examples of the unsaturated carboxylic acid include acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2,2,1]hept-2-ene-5,6-dicarboxylic acid.

The unsaturated carboxylic acid anhydride has an acid anhydride group as the above-described functional group. Examples of the unsaturated carboxylic anhydride include, for example, maleic anhydride, itaconic anhydride, citraconic anhydride, tetrahydrophthalic anhydride, and bicyclo[2,2,1]hept-2-ene-5,6-dicarboxylic anhydride. As the unsaturated carboxylic acid anhydride, preferably maleic anhydride is used.

The vinyl ester compound has an ester group as the above-described functional group. Examples of the vinyl ester compound include vinyl acetate, vinyl propionate, and vinyl n-butyrate.

The thiol group-containing ethylenically unsaturated compound has a thiol group as the above-described functional group. Examples of the thiol group-containing ethylenically unsaturated compound include allyl mercaptan and 2-vinylbenzyl mercaptan.

As the monomer, preferably an unsaturated carboxylic acid and/or an unsaturated carboxylic acid anhydride are/is used. That is, as the above-described functional group, preferably a carboxyl group and/or an acid anhydride group are/is used. When the functional group is a carboxyl group and/or an acid anhydride group, the pot life and the adhesion during a low-temperature lamination process can be improved.

As the monomer, more preferably an unsaturated carboxylic acid anhydride is used. That is, as the above-described functional group, more preferably an acid anhydride group is used. When the functional group is an acid anhydride group, the pot life and adhesion during a low-temperature lamination process can be further improved.

The monomers may be used alone or in combination of two or more.

[Production of Crystalline Modified Olefin Polymer]

The crystalline modified olefin polymer is obtained by modifying a crystalline $\alpha$-olefin polymer having 2 to 20 carbon atoms with a monomer.

To modify a crystalline $\alpha$-olefin polymer having 2 to 20 carbon atoms with a monomer, for example, a crystalline $\alpha$-olefin polymer having 2 to 20 carbon atoms is first dissolved in a known organic solvent (for example, toluene).

Next, the monomer and a radical polymerization initiator are added thereto, and heated and stirred.

The modification amount (introduction amount) of the monomer in the modified product of the crystalline $\alpha$-olefin polymer having 2 to 20 carbon atoms, i.e., the content ratio of the structural unit derived from the monomer in the modified product of the crystalline $\alpha$-olefin polymer having 2 to 20 carbon atoms is, for example, 0.1% by mass or more, preferably 0.5% by mass or more, and, for example, 15% by mass or less, preferably 10% by mass or less, more preferably 5% by mass or less, even more preferably 4% by mass or less, particularly preferably 2% by mass or less, and most preferably 1.5% by mass or less with respect to the modified product of the crystalline $\alpha$-olefin polymer having 2 to 20 carbon atoms.

When the modification amount is the lower limit or more and the upper limit or less, the pot life can be improved.

The above-described modification amount is confirmed, for example, by a known method such as $^1$H-NMR measurement.

Examples of the radical polymerization initiator include an organic peroxide and an organic perester.

Examples of the organic peroxide include dicumyl peroxide, benzoyl peroxide, dichlorobenzoyl peroxide, dicumyl peroxide, di-tert-butyl peroxide, 2,5-dimethyl-2,5-di(peroxybenzoate)hexyne-3, 1,4-bis(tert-butyl peroxyisopropyl)benzene, lauroyl peroxide, 2,5-dimethyl-2,5-di(tert-butyl peroxy)hexyne-3, 2,5-dimethyl-2,5-di(tert-butyl peroxide)hexane, and tert-butyl peroxybenzoate. Examples of the organic peresters also include, for example, tert-butyl peracetate, tert-butyl perphenyl acetate, tert-butyl perisobutyrate, tert-butyl per sec-octoate, tert-butyl perpivalate, cumyl perpivalate, and tert-butyl perdiethylacetate.

As the radical polymerization initiator, preferably an organic peroxide is used. As the radical polymerization initiator, more preferably, di-tert-butylperoxide is used.

The blending ratio of the radical polymerization initiator is, for example, 0.001 parts by mass or more and, for example, 10 parts by mass or less with respect to 100 parts by mass of the crystalline $\alpha$-olefin polymer having 2 to 20 carbon atoms.

The radical polymerization initiators may be used alone or in combination of two or more.

The heating temperature is, for example, 50° C or more, preferably 80° C or more, and for example, 250° C or less. The reaction time is, for example, 1 minute or more and 10 hours or less.

In this manner, a crystalline modified olefin polymer (a varnish of a crystalline modified olefin polymer) is obtained by modifying a crystalline $\alpha$-olefin polymer having 2 to 20 carbon atoms with a monomer.

The crystalline modified olefin polymer has a melting point of, for example, 40°C or more, preferably 60°C or more, and, for example, 100°C or less, preferably 90°C or less.

The crystalline modified olefin polymer has a weight-average molecular weight of, for example, 10000 or more, preferably 50000 or more, and, for example, 500000 or less, preferably 300000 or less, more preferably 200000 or less, which is measured by a GPC method and converted into the standard polystyrene.

The content ratio of the crystalline modified olefin polymer is described later.

<Acid Anhydride Monomer>

The acid anhydride monomer has a ring structure and two or more acid anhydride groups. The acid anhydride group means a -CO-O-CO- group obtained by the intramolecular dehydration condensation of two molecules of carboxylic acid.

Examples of the ring structure include an alicyclic structure, a heterocyclic and aromatic ring structure. As the ring structure, preferably an aromatic ring structure is used. That is, the acid anhydride monomer is preferably an aromatic ring-containing acid anhydride monomer.

Examples of the aromatic ring-containing acid anhydride monomer include an aromatic ring-containing acid dianhydride and an aromatic ring-containing acid trianhydride.

Examples of the aromatic ring-containing dianhydride include pyromellitic anhydride, bisphenol-type dianhydride (preferably bisphenol A-type dianhydride), ethylene glycol bisanhydrotrimellitate, naphthalene-1,4,5,8-tetracarboxylic dianhydride, 3,3',4,4'-biphenyltetracarboxylic dianhydride, and 3,3',4,4'-benzophenonetetracarboxylic dianhydride.

Examples of the aromatic ring-containing acid trianhydride include mellitic anhydride.

As the aromatic ring-containing acid anhydride monomer, preferably an aromatic ring-containing acid dianhydride is used. As the aromatic ring-containing acid ananhydride monomer, more preferably, pyromellitic acid anhydride, bisphenol A-type acid dianhydride, and/or ethylene glycol bis anhydrotrimerite are/is used. As the aromatic ring-containing acid anhydride monomer, pyromellitic acid anhydride is more preferably used from the viewpoint of improving the adhesion during a low-temperature lamination process and the heat resistance.

The acid anhydride monomer may be used alone or in combination of two or more thereof.

The acid anhydride monomer has a molecular weight of, for example, 1000 or less, preferably 600 or less, more preferably 400 or less, and, for example, 100 or more.

When the molecular weight of the acid anhydride monomer is the above upper limit or less, the cross-link density can be improved, and thus the adhesion and the heat resistance can be improved.

The content ratio of the acid anhydride monomer is described later.

<Cross-linking Agent>

The cross-linking agent includes an epoxy compound and/or an oxazoline compound.

Examples of the epoxy compound include a bisphenol type epoxy resin (for example, a bisphenol A type epoxy resins, a bisphenol F type epoxy resin), a novolac type epoxy resin (for example, a phenol novolac type epoxy resin, a cresol novolac type epoxy resin), an aliphatic type epoxy resin, an alicyclic epoxy resin, a hydrogenated bisphenol type epoxy resin, and an amine type epoxy resin. The epoxy compound is preferably a novolac type epoxy resin. The epoxy compound is more preferably a phenol novolac type epoxy resin.

Examples of the oxazoline compound include an oxazoline group-containing polymer. Examples of the oxazoline group-containing polymer include a homopolymer of an oxazoline group-containing monomer and a copolymer of an oxazoline group-containing monomer and another monomer copolymerizable with the oxazoline group-containing monomer.

Examples of the oxazoline group-containing monomer include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-ethyl-2-oxazoline, 2-isopropenyl-2-oxazoline, and 2-isopropenyl-4,4-dimethyl-2-oxazoline.

Examples of the other monomer copolymerizable with the oxazoline group-containing monomer include, for example, (meth)acrylic acid alkyl ester, unsaturated carboxylic acid (e.g., acrylic acid, methacrylic acid), unsaturated nitrile (e.g., acrylonitrile, methacrylonitrile), unsaturated amide (e.g., (meth)acrylamide), vinyl ester (e.g., vinyl acetate, vinyl propionate), vinyl ether (e.g., methyl vinyl ether, ethyl vinyl ether), $\alpha$-olefin (e.g., ethylene, propylene), and unsaturated aromatic monomer (e.g., styrene, $\alpha$-methylstyrene).

As the oxazoline compound, preferably a copolymer of an oxazoline group-containing monomer and another monomer copolymerizable with the oxazoline group-containing monomer is used. As the oxazoline compound, more preferably an oxazoline group-containing polystyrene is used.

The cross-linking agent preferably includes an epoxy compound or an oxazoline compound, and more preferably includes an epoxy compound without including an oxazoline compound from the viewpoint of improving the adhesion during a low-temperature lamination process and the heat resistance.

The cross-linking agents may be used alone or in combination of two or more.

The content ratio of the cross-linking agent is described later.

<Non-crystalline Hydrocarbon-based Polymer>

From the viewpoint of improving the pot life, as necessary, the adhesive composition includes a non-crystalline hydrocarbon-based polymer. The non-crystalline is defined as a property of a compound having a heat of fusion of less than 1 J/g and a Tg of 0°C or less.

A non-crystalline hydrocarbon-based polymer is a polymer containing a structural unit derived from hydrocarbon. As the hydrocarbon, from the viewpoint of improving the adhesion during a low-temperature lamination process, preferably an olefin having 2 to 20 carbon atoms is used. That is, the non-crystalline hydrocarbon-based polymer is preferably an olefin polymer containing a structural unit derived from an olefin having 2 to 20 carbon atoms. That is, the non-crystalline hydrocarbon-based polymer is preferably a polymer of an olefin having 2 to 20 carbon atoms.

Examples of the olefin having 2 to 20 carbon atoms include ethylene, propylene, 1-butene, cis-2-butene, trans-2-butene, isobutylene (isobutene), 1-pentene, cis-2-pentene, trans-2-pentene, 2-methyl-1-butene, 2-methyl-2-butene, 3-methyl-1-butene, 1-hexene, 2-hexene, 3-hexene, 2,3-dimethyl-2-butene, 1-heptene, 1-octene, 1-nonene, and 1-decene, 1-dodecene, 1-tetradecene, 1-hexadecene, 1-octadecene, and 1-eicosene. As the olefin having 2 to 20 carbon atoms, preferably an olefin having 2 to 4 carbon atoms is used. As the olefin having 2 to 20 carbon atoms, more preferably ethylene, propylene, and/or isobutylene are/is used. As the olefin having 2 to 20 carbon atoms, a use of ethylene and propylene in combination and a use of isobutylene only are more preferable. That is, the non-crystalline hydrocarbon-based polymer is more preferably an ethylene/propylene copolymer and/or polyisobutylene.

Further, the type of the structural unit derived from the hydrocarbon and the content ratio thereof are selected so that the hydrocarbon-based polymer is non-crystalline.

Specifically, when the structural unit derived from the hydrocarbon includes a structural unit derived from ethylene and a structural unit derived from propylene, the content ratio of the structural unit derived from ethylene is, for example, 40 mol % or more, preferably 50 mol % or more, and for example, 80 mol % or less, preferably 60 mol % or less with respect to 100 mol % of the total amount of the structural unit derived from ethylene and the structural unit derived from propylene. The content ratio of the structural unit derived from propylene is, for example, 20 mol % or more, preferably 40 mol % or more, and for example, 60 mol % or less, preferably 50 mol % or less with respect to 100 mol % of the total amount of the structural unit derived from ethylene and the structural unit derived from propylene.

When the content ratio of the structural unit derived from ethylene and the content ratio of the structural unit derived from propylene are the above-described lower limit or more and the above-described upper limit or less, excellent adhesion during a low-temperature lamination process is achieved.

The non-crystalline hydrocarbon-based polymer can be produced in the same method as the method of producing a crystalline $\alpha$-olefin polymer having 2 to 20 carbon atoms, which is cited as an example in the above description of the crystalline modified olefin polymer.

The kinematic viscosity at 200°C of the non-crystalline hydrocarbon-based polymer is, for example, 1 cSt or more, and for example, 100000 cSt or less. The non-crystalline hydrocarbon-based polymer can be classified into a non-crystalline hydrocarbon-based synthetic oil and a non-crystalline hydrocarbon-based semi-solid resin based on the above-described kinematic viscosity. Specifically, a non-crystalline hydrocarbon-based polymer having a kinematic viscosity of 1 cSt or more, preferably 10 cSt or more, more preferably 100 cSt or more, and also, for example, 10000 cSt or less, preferably 1000 cSt or less, more preferably 500 cSt or less is classified into a non-crystalline hydrocarbon-based synthetic oil. Alternatively, a non-crystalline hydrocarbon-based polymer having a kinematic viscosity of more than 10000 cSt, preferably 30000 cSt or more, and 100000 cSt or less, preferably 60000 cSt or less is classified into a non-crystalline hydrocarbon-based semi-solid resin.

When the kinematic viscosity at 200° C is the above-described lower limit or more and the above-described upper limit or less, the adhesion during a low-temperature lamination process can be improved.

The kinematic viscosity at 200°C can be measured based on JIS K 2283.

The non-crystalline hydrocarbon-based polymer has a weight-average molecular weight of, for example, 5000 or more, and for example, 300000 or less, which is measured by GPC method and converted into the standard polystyrene. Specifically, when the non-crystalline hydrocarbon-based polymer is a non-crystalline hydrocarbon-based synthetic oil, the above-described weight average molecular weight is, for example, 5000 or more, preferably 10000 or more, and for example, 300000 or less, preferably 100000 or less, more preferably 50000 or less, and even more preferably 20000 or less. When the non-crystalline hydrocarbon-based polymer is a non-crystalline hydrocarbon-based semi-solid resin, the above-described weight average molecular weight is, for example, 5000 or more, preferably 10000 or more, more preferably 50000 or more, even more preferably 100000 or more, even more preferably 120000 or more, and is, for example, 300000 or less, preferably 200000 or less, more preferably 160000 or less.

The non-crystalline hydrocarbon-based polymers may be used alone or in combination of two or more.

The content ratio of the non-crystalline hydrocarbon-based polymer is described later.

<Catalyst>

The adhesive composition may also include a catalyst from the viewpoint of promoting the cross-linking reaction of the cross-linking agent. Examples of the catalyst include an amine catalyst and a phosphine catalyst.

Examples of the amine catalyst include a strongly basic tertiary amine. Examples of the strongly basic tertiary amine include, for example, 1,8-diazabicyclo[5.4.0]undecene-7(DBU) and 1,6-diazabicyclo[3.4.0]-5-nonene. As the amine catalyst, preferably 1,8-diazabicyclo[5.4.0]undecene-7(DBU) is used.

Examples of the phosphine catalyst include tributylphosphine, methyldiphenylphosphine, triphenylphosphine, and phenylphosphine. As the phosphine catalyst, preferably triphenylphosphine is used.

As the catalyst, preferably an amine catalyst is used from the viewpoint of improving the adhesion during a low-temperature lamination process and the heat resistance.

The catalysts may be used alone or in combination of two or more.

The content ratio of the catalyst is described later.

<Additives>

As necessary, the adhesive composition may contain an additive in an appropriate ratio.

Examples of the additive include a leveling agent, an antifoaming agent, an antioxidant, a heat stabilizer, an ultraviolet absorber, a plasticizer, a surfactant, a pigment, a thixotropic agent, a thickener, a tackifier, a surface modifier, an anti-settling agent, a weatherproofing agent, a pigment dispersant, an antistatic agent, a filler, an antifungal agent, and a silane coupling agent.

The additives may be used alone or in combination of two or more.

<Preparation of Adhesive Composition>

To prepare the adhesive composition, a crystalline modified olefin polymer, an acid anhydride monomer, a cross-linking agent, a non-crystalline hydrocarbon-based polymer to be blended as necessary, a catalyst to be blended as necessary, and an additive to be blended as necessary are mixed.

Specifically, first, a crystalline modified olefin polymer and a non-crystalline hydrocarbon-based polymer to be blended as necessary are mixed together to prepare a resin composition. More specifically, the crystalline modified olefin polymer and the non-crystalline hydrocarbon-based polymer to be blended as necessary are mixed and dissolved in a solvent to prepare a varnish of the resin composition.

Examples of the solvent include aliphatic hydrocarbons, alicyclic hydrocarbons, aromatic hydrocarbons, ketones, alkyl esters, glycol ether esters, ethers, and polar non-protons. Examples of the aliphatic hydrocarbons include, for example, n-hexane, n-heptane, and octane. Examples of the alicyclic hydrocarbons include cyclohexane and methylcyclohexane. Examples of the aromatic hydrocarbons include toluene and xylene. Examples of the ketones include, for example, acetone, methyl ethyl ketone, methyl isobutyl ketone, and cyclohexanone. Examples of the alkyl esters include, for example, methyl acetate, ethyl acetate, butyl acetate, and isobutyl acetate. Examples of the glycol ether esters include methyl cellosolve acetate, ethyl cellosolve acetate, methyl carbitol acetate, ethyl carbitol acetate, ethylene glycol ethyl ether acetate, propylene glycol methyl ether acetate, 3-methyl-3-methoxybutyl acetate, and ethyl-3-ethoxypropionate. Examples of the ethers include, for example, diethyl ether, tetrahydrofuran, and dioxane. Examples of the polar non-protons include, for example, N-methylpyrrolidone, dimethylformamide, N,N'-dimethylacetamide, dimethylsulfoxide, and

hexamethylphosphonylamide.

As the solvent, preferably alicyclic hydrocarbons and alkyl esters are used. As the solvent, more preferably methylcyclohexane and/or ethyl acetate are/is used.

The solvents may be used alone or in combination of two or more. Preferably, as the solvent, methylcyclohexane and ethyl acetate are used in combination.

The blending ratio of the solvent is, for example, 200 parts by mass or more and, for example, 1000 parts by mass or less with respect to 100 parts by mass of the total amount of the crystalline modified olefin polymer and the non-crystalline hydrocarbon-based polymer to be blended as necessary.

The melting temperature is, for example, 40° C or more, and for example, 110° C or less. The dissolution time is, for example, 1 hour or more, and for example, 4 hours or less.

In this manner, a resin composition is prepared.

The resin composition has an acid value of, for example, 1.00 KOHmg/g or more, preferably 5.00 KOHmg/g or more, and for example, 20.00 KOHmg/g or less, preferably 15.00 KOHmg/g or less, more preferably 10.00 KOHmg/g or less.

The method for measuring the above-described acid value is detailed in Examples described later.

Next, an acid anhydride monomer, a cross-linking agent, a catalyst to be blended as necessary, and an additive to be blended as necessary are blended into the resin composition.

In this manner, an adhesive composition (varnish of an adhesive composition) is prepared.

The content ratio of the crystalline modified olefin polymer is, for example, 70 parts by mass or more, preferably 80 parts by mass or more, more preferably 85 parts by mass or more, and for example, 95 parts by mass or less with respect to 100 parts by mass of the total amount of the crystalline modified olefin polymer, the acid anhydride monomer, and the cross-linking agent.

The content ratio of the acid anhydride monomer is, for example, 0.1 parts by mass or more, preferably 1.0 part by mass or more, more preferably 1.5 parts by mass or more, and also 5.0 parts by mass or less, preferably 3.0 parts by mass or less, more preferably 2.0 parts by mass or less with respect to 100 parts by mass of the total amount of the crystalline modified olefin polymer, the acid anhydride monomer, and the cross-linking agent.

The content ratio of the acid anhydride monomer is, for example, 0.1 parts by mass or more, preferably 1.0 part by mass or more, more preferably 1.5 parts by mass or more, and also, for example, 5.0 parts by mass or less, preferably 3.0 parts by mass or less, more preferably 2.5 parts by mass or less with respect to 100 parts by mass of the crystalline modified olefin polymer.

The content ratio of the acid anhydride monomer is, for example, 1.0 part by mass or more, preferably 5.0 parts by mass or more, more preferably 10 parts by mass or more, even more preferably 15 parts by mass or more, and also, for example, 40 parts by mass or less, preferably 30 parts by mass or less, more preferably 25 parts by mass or less with respect to 100 parts by mass of the cross-linking agent.

The molar ratio (acid anhydride monomer/monomer) of the acid anhydride monomer to the monomer in the crystalline α-olefin polymer having 2 to 20 carbon atoms is, for example, 0.5 or more, preferably 1.0 or more, more preferably 2.0 or more, and also, for example, 7.0 or less, preferably 6.0 or less, more preferably 5.0 or less.

The content ratio of the cross-linking agent is, for example, 1.0 part by mass or more, preferably 5.0 parts by mass or more, more preferably 8.0 parts by mass or more, and also, for example, 20 parts by mass or less, preferably 15 parts by mass or less, more preferably 10 parts by mass or less with respect to 100 parts by mass of the total amount of the crystalline modified olefin polymer, the acid anhydride monomer, and the cross-linking agent.

The content ratio of the cross-linking agent is, for example, 1.0 part by mass or more, preferably 5.0 parts by mass or more, more preferably 8.0 parts by mass or more, and also, for example, 30 parts by mass or less, preferably 20 parts by mass or less, more preferably 15 parts by mass or less with respect to 100 parts by mass of the crystalline modified olefin polymer.

When the adhesive composition contains a non-crystalline hydrocarbon-based polymer, the content ratio of the crystalline modified olefin polymer is, for example, 60 parts by mass or more, preferably 70 parts by mass or more, and for example, 90 parts by mass or less with respect to 100 parts by mass of the total amount of the crystalline modified olefin polymer and the non-crystalline hydrocarbon-based polymer. The content ratio of the non-crystalline hydrocarbon-based polymer is, for example, 10 parts by mass or more, and for example, 40 parts by mass or less, preferably 30 parts by mass or less with respect to 100 parts by mass of the total amount of the crystalline modified olefin polymer and the non-crystalline hydrocarbon-based polymer.

The content ratio of the catalyst is, for example, 0.1 parts by mass or more, preferably 0.5 parts by mass or more, and for example, 2.0 parts by mass or less, preferably 1.0 part by mass or less with respect to 100 parts by mass of the total amount of the crystalline modified olefin polymer, the acid anhydride monomer, and the cross-linking agent.

Furthermore, the adhesive composition can also be diluted with the above-described solvent during and/or after the above-described preparation.

When the adhesive composition is diluted, the varnish of the adhesive composition has a solid content concentration of, for example, 10% by mass or more, and for example, 70% by mass or less.

The adhesive composition has an acid value of, for example, 1.00 KOHmg/g or more, preferably 5.00 KOHmg/g or more, more preferably 10.00 KOHmg/g or more, even more preferably 15.00 KOHmg/g or more, and also for example, 30.00 KOHmg/g or less, preferably 25.00 KOHmg/g or less.

The method of measuring the above-described acid value is detailed in Examples described later.

<Operations and Effects>

The adhesive composition includes a crystalline modified olefin polymer, an acid anhydride monomer, and a cross-linking agent. Such an adhesive composition is cured by a cross-linking reaction between the crystalline modified olefin polymer, the acid anhydride monomer, and the cross-linking agent.

Then, the acid anhydride monomer has two or more acid anhydride groups. Therefore, in the above-described cross-linking reaction, the cross-link density is improved. As a result, the adhesion during a low-temperature lamination process is improved.

Furthermore, the acid anhydride monomer has a ring structure. As a result, the heat resistance is improved.

The adhesive composition is excellent in adhesion during a low-temperature lamination process and heat resistance, and thus can be preferably used, for example, as an adhesive (dry laminate adhesive) of various components (for example, electronic components, optical components, and battery components), and in particular, can be preferably used as an adhesive of a packaging material for battery cases.

In the following description, a laminate including an adhesive layer made of the above-described adhesive composition, a packaging material including the laminate, and a packaging material for battery cases including the packaging material are detailed.

2. Laminate

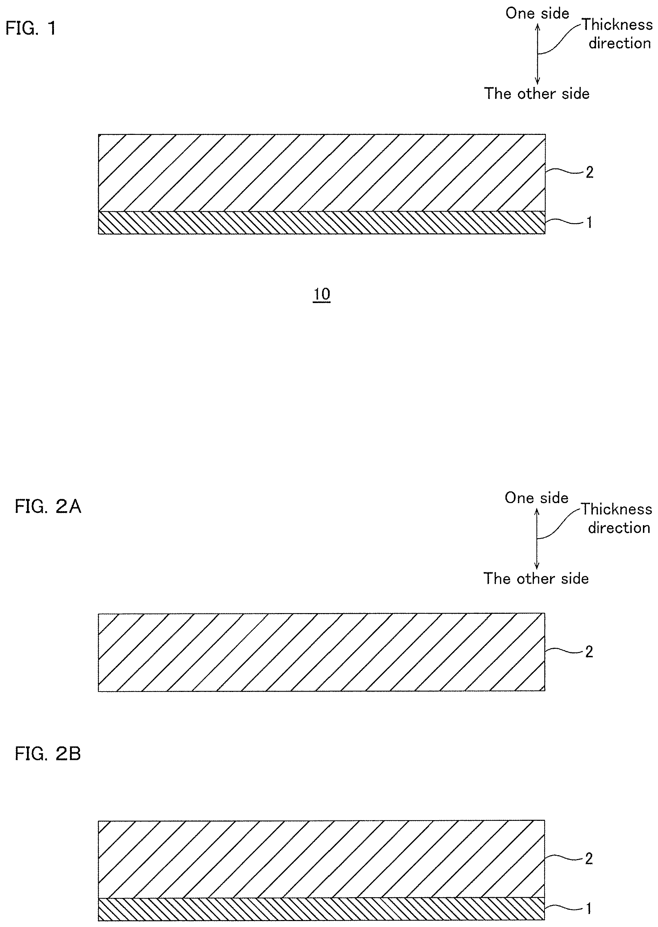

Referring to FIG. 1, one embodiment of the laminate of the present invention is described.

In FIG. 1, the up-down direction on the surface of the drawing sheet is an up-down direction (thickness direction). The upper side on the surface of the drawing sheet is an upper side (one side in the thickness direction). The lower side on the surface of the drawing sheet is a lower side (the other side in the thickness direction). In addition, a right-left direction and a depth direction on the surface of the drawing sheet are plane directions orthogonal to the up-down direction. Specifically, the directions conform to the arrow indicating a direction in each drawing.

The laminate 10 has a film shape (including a sheet shape) having a predetermined thickness. The laminate 10 extends in a plane direction orthogonal to the thickness direction. The laminate 10 has a flat upper surface and a flat lower surface.

The laminate 10 includes a first adhesive layer 1 and a substrate 2 in order toward one side in the thickness direction. Specifically, the laminate 10 includes the first adhesive layer 1 and the substrate 2 disposed directly on the upper surface (one surface in the thickness direction) of the first adhesive layer 1.

The thickness of the laminate 10 is not particularly limited. The laminate 10 has a thickness of, for example, 10 $\mu$m or more, and for example, 150 $\mu$m or less.

[First Adhesive Layer]

The first adhesive layer 1 is an adhesive layer for bonding an arbitrary adherend to the substrate 2. The first adhesive layer 1 is made of an adhesive composition.

Next, in order to dispose (form) the first adhesive layer 1, as detailed later, the adhesive composition is applied onto the other surface of the substrate 2 in the thickness direction, and dried, as necessary, by heating. In this manner, the first adhesive layer 1 is disposed (formed).

The first adhesive layer 1 has a thickness, for example, 1 $\mu$m or more and, for example, 50 $\mu$m or less.

[Substrate]

The substrate 2 has a film shape (including a sheet shape) having a predetermined thickness.

A material of the substrate 2 is not particularly limited. Examples of the material of the substrate 2 include a polymer material and a metal material. Examples of the polymer material include olefin resin (for example, polyethylene and polypropylene), an acrylic resin, a polyester resin, a polycarbonate resin, an acrylonitrile-styrene-butadiene copolymer resin (ABS resin), a polyamide resin (for example, nylon), and a polyphenylene sulfide resin. Examples of the metal material include aluminum, gold, silver, copper, nickel, zinc, titanium, cobalt, indium, and chromium. In particular, when the laminate 10 is included in a packaging material 20 (described later), a metal material is preferably selected as the material of the substrate 2, and more preferably, aluminum is selected.

The thickness of the substrate 2 is not particularly limited. The substrate 2 has a thickness of, for example, 10 $\mu$m or more, and for example, 100 $\mu$m or less.

[Production of Laminate]

Referring to FIGS. 2A and 2B, one embodiment of a method of producing the laminate is described.

The method of producing the laminate 10 includes a first step of preparing a substrate 2, and a second step of applying the adhesive composition to the other surface of the substrate 2 in the thickness direction to dispose (form) a first adhesive layer 1 on the other surface of the substrate 2 in the thickness direction.

In the first step, a substrate 2 is prepared as shown in FIG. 2A.

In the second step, as shown in FIG. 2B, a first adhesive layer 1 is disposed (formed) on the other surface of the substrate 2 in the thickness direction.

In order to dispose (form) the first adhesive layer 1 onto the other surface of the substrate 2 in the thickness direction, a varnish of the adhesive composition is applied to the other surface of the substrate 2 in the thickness direction.

In order to apply the varnish of the adhesive composition onto the other surface of the substrate 2 in the thickness direction, first, as necessary, the other surface of the substrate 2 in the thickness direction is subjected to a surface treatment.

Examples of the surface treatment include corona treatment, plasma treatment, flame treatment, ozone treatment, primer treatment, glow treatment, and saponification treatment, and preferably corona treatment is used.

Next, the varnish of the adhesive composition is applied onto the other surface of the substrate 2 in the thickness direction by a known method, and dried, as necessary, by heating.

The heating temperature is, for example, 50°C or more, preferably 80°C or more, and for example, 140°C or less.

The heating time is, for example, 10 seconds or more, and for example, 120 seconds or less.

In this manner, the first adhesive layer 1 made of the adhesive composition is disposed (formed) on the other surface of the substrate 2 in the thickness direction. As described above, a laminate 10 is produced.

Such a laminate 10 includes the first adhesive layer 1 made of the adhesive composition. Therefore, when the laminate 10 is bonded to an arbitrary adherend via the first adhesive layer 1, excellent adhesion during a low-temperature lamination process and excellent heat resistance are achieved.

3. Packaging Material

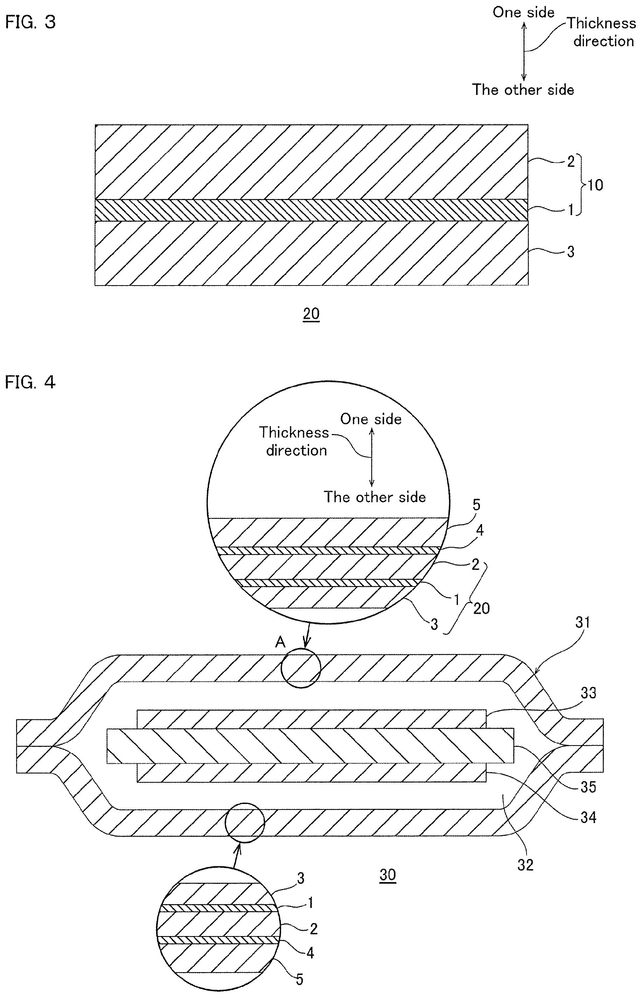

Referring to FIG. 3, one embodiment of the packaging material of the present invention is described.

A packaging material 20 has a film shape (including a sheet shape) having a predetermined thickness. The packaging material 20 extends in a plane direction orthogonal to the thickness direction. The packaging material 20 has a flat upper surface and a flat lower surface.

The packaging material 20 includes an inner layer 3 and the laminate 10 (the laminate 10 including the first adhesive layer 1 and the substrate 2 in order toward one side in the thickness direction) in order toward one side in the thickness direction. Specifically, the packaging material 20 includes the inner layer 3 and the laminate 10 disposed directly on the upper surface (one surface in the thickness direction) of the inner layer 3.

The thickness of the packaging material 20 is not particularly limited. The packaging material 20 has a thickness of, for example, 15 μm or more, and for example, 300 μm or less.

[Inner layer]

The inner layer 3 is a layer to be the inside when the packaging material 20 is formed into a bag shape.

The material of the inner layer 3 is appropriately selected depending on the presence or absence of heat sealability and the type of the object to be accommodated in the bag when the packaging material 20 is formed into a bag shape. As detailed later, when the object to be accommodated is an electrolytic solution, a polyolefin film is selected.

The thickness of the inner layer 3 is not particularly limited. The inner layer 3 has a thickness of, for example, 10 μm or more, and for example, 600 μm or less.

[Production of Packaging Material]

In order to produce a packaging material 20, the inner layer 3 is disposed on the other surface of the laminate 10 in the thickness direction (the other surface of the first adhesive layer 1 in the thickness direction), and the first adhesive layer 1 is aged. In this manner, the first adhesive layer 1 is cured, and the inner layer 3 and the laminate 10 are bonded to each other. As described above, a packaging material 20 is produced.

The aging temperature is low because the packaging material 20 includes the laminate 10. Specifically, the temperature is 20°C or more, preferably 40°C or more, and for example, 80°C or less. The aging time is, for example, 1 day or more, and for example, 7 days or less, preferably 5 days or less.

The packaging material 20 includes the laminate 10. Therefore, excellent adhesion during a low-temperature lamination process and excellent heat resistance are achieved.

4. Packaging Material for Battery Cases and Battery

Referring to FIG. 4, one embodiment of a packaging material for battery cases of the present invention and a battery using the packaging material for battery cases is described.

A battery 30 includes a packaging material for battery cases 31 and an electrolytic solution 32 packaged in the packaging material for battery cases 31. Further, the battery 30 includes a positive electrode 33, a negative electrode 34, and a separator 35 which are accommodated in the packaging material for battery cases 31.

[Packaging Material for Battery Cases]

The packaging material for battery cases 31 is formed into a bag shape such that the inner layer 3 of the packaging material for battery cases 31 is in contact with the electrolytic solution 32. Specifically, the packaging material for battery cases 31 packages the electrolytic solution 32 such that the inner layer 3 is in contact with the electrolytic solution 32.

The packaging material for battery cases 31 includes, as shown in the enlarged view of A in FIG. 4, the packaging material 20 (the packaging material 20 including the inner layer 3, the first adhesive layer 1, and the substrate 2 in order toward one side in the thickness direction), a second adhesive layer 4, and an outer layer 5 in order toward one side in the thickness direction. Specifically, the packaging material for battery cases 31 includes the packaging material 20, the second adhesive layer 4 disposed directly on the upper surface (one surface in the thickness direction) of the packaging material 20, and the outer layer 5 disposed directly on the upper surface (one surface in the thickness direction) of the second adhesive layer 4.

As described above, the packaging material 20 includes the inner layer 3, the first adhesive layer 1, and the substrate 2 in order toward one side in the thickness direction. In the packaging material for battery cases 31, a polyolefin film is selected as the inner layer 3 from the viewpoint of chemical resistance (electrolytic solution resistance) to the electrolytic solution 32. Examples of the polyolefin film include a polyethylene-based film and a polypropylene-based film. Examples of the polyethylene-based film include a low-density polyethylene film (LDPE) and a linear low-density polyethylene film (LLDPE). Examples of the polypropylene-based film include an oriented polypropylene film (CPP film), a uniaxially oriented polypropylene film, and a biaxially oriented polypropylene film (OPP film). As the polyolefin film, preferably a polypropylene-based film is used. As the polyolefin film, more preferably an oriented polypropylene film (CPP film) is used.

In the packaging material for battery cases 31, a metal material is preferably used as the material of the substrate 2. The material of the substrate 2 is more preferably aluminum.

The second adhesive layer 4 is formed from a known adhesive. Instead of the known adhesive, the adhesive composition described above can also be used.

The thickness of the second adhesive layer 4 is not particularly limited. The inner layer 3 has a thickness of, for example, 1 $\mu$m or more and, for example, 50 $\mu$m or less.

The outer layer 5 is a layer to be an outer side of the packaging material for battery cases 31.

Examples of the material of the outer layer 5 include the polymer materials cited in the above description of the substrate 2, and preferably, a polyamide resin is used, and more preferably, nylon is used.

The thickness of the outer layer 5 is not particularly limited. The outer layer 5 has a thickness of, for example, 10 $\mu$m or more, and, for example, 100 $\mu$m or less.

The packaging material for battery cases 31 is produced by disposing the outer layer 5 via the second adhesive layer 4 formed by applying a known adhesive (or adhesive composition) onto one surface of the packaging material 20 in the thickness direction (one surface of the substrate 2 in the thickness direction).

The packaging material for battery cases 31 includes a packaging material 20. Therefore, excellent adhesion during a low-temperature lamination process and excellent heat resistance are achieved.

In addition, in FIG. 4, both ends (of the inner layer 3 opposite to each other) of the packaging material for battery cases 31 are sealed by heat sealing, thereby forming a bag shape.

[Electrolytic Solution]

The electrolytic solution 32 is not particularly limited, and includes, for example, ethylene carbonate, diethyl carbonate, and dimethyl carbonate, and lithium salts such as lithium hexafluorophosphate.

The positive electrode 33 and the negative electrode 34 are disposed so as to be in contact with the electrolytic solution 32 and face each other at an interval therebetween. The separator 35 is disposed so as to be sandwiched between the positive electrode 33 and the negative electrode 34.

The above-described battery 30 is used, for example, as a lithium-ion secondary battery. In such a case, the packaging material for battery cases 31 is used as a packaging material for lithium-ion secondary battery cases.

Examples

Next, the present invention is described based on Examples and Comparative Examples. The present invention is however not limited by the following Examples. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

<Details of Components>

The trade names and abbreviations of the components used in each Production Examples, Examples, and Comparative Examples are detailed.

OPPANOL B12SFN: Non-crystalline hydrocarbon-based polymer, polyisobutylene, weight-average molecular weight: 76000, kinematic viscosity at 200°C measured in conformity to JIS K 2283: 37000 cSt, manufactured by BASF

PMDA: Pyromellitic acid anhydride, molecular weight: approximately 218, manufactured by Tokyo Chemical Industry Co., Ltd.

BISDA: Bisphenol A type acid dianhydride, molecular weight: approximately 520, manufactured by SABIC

TMEG-100: Ethylene glycol bis anhydrotrimellitate, molecular weight: approximately 410, manufactured by New Japan Chemical Co., Ltd.

TH: 1,2,3,6-tetrahydrophthalic anhydride, manufactured by New Japan Chemical Co., Ltd.

jER152: Phenolic novolac epoxy resin, manufactured by Mitsubishi Chemical Corporation

RPS-1005: Oxazoline group-containing polystyrene, manufactured by NIPPON SHOKUBAI CO., LTD.

D-170N: Isocyanate compound, manufactured by Mitsui Chemicals, Inc.

DBU: 1,8-diazabicyclo [5.4.0] undecene-7, manufactured by Wako

TPP: Triphenylphosphine, manufactured by Wako

<Production of Crystalline Modified Olefin Polymer>

Production Example 1

[Production of Crystalline $\alpha$-olefin Polymer Having 2 to 20 Carbon Atoms]

A sufficiently nitrogen-substituted 2-liter autoclave was charged with 900 ml of hexane and 90 g of 1-butene. Then, 1 mmol of triisobutylaluminum was added thereto, and the temperature was raised to 70° C, and thereafter propylene was supplied to apply a total pressure of 7kg/cm$^2$G thereto, and 0.30 mmol of methylaluminoxane and 0.001 mmol of rac-dimethylsilylene-bis{ 1-(2-methyl-4-phenylindenyl)}zirconium dichloride in terms of Zr atoms were added. The mixture was polymerized for 30 minutes while propylene was continuously supplied to maintain the total pressure of 7kg/cm$^2$G. In this manner, a propylene/1-butene copolymer (crystalline $\alpha$-olefin polymer having 2 to 20 carbon atoms) was produced. After the polymerization, the autoclave was degassed, and the propylene/1-butene copolymer was collected in a large amount of methanol, and dried under a reduced pressure at 110°C for 12 hours.

The propylene/1-butene copolymer had a melting point of 78.3°C. The propylene/1-butene copolymer had a heat of fusion of 29.2J/g, which was measured in conformity to JIS K7122. The propylene/1-butene copolymer had a weight-average molecular weight of 330000, which was measured by a GPC method and converted to the standard polystyrene. The propylene content of the propylene/1-butene copolymer was 67.2 mol %. The above-described content was determined by $^{13}$C-NMR determination.

[Production of Crystalline Modified Olefin Polymer]

3 kg of the propylene/1-butene copolymer was added to 10 L of toluene, and the temperature was raised to 145°C in a nitrogen atmosphere to dissolve the propylene/1-butene copolymer in the toluene. In addition, while being stirred, 382g of maleic anhydride as a monomer and 175g of di-tert-butyl peroxide as a radical polymerization initiator were fed thereto over 4 hours, and then the mixture was stirred at 145°C for 2 hours. In this manner, a maleic anhydride-modified propylene/1-butene copolymer was produced. Thereafter, this was cooled, and a large amount of acetone was charged thereto to precipitate the maleic anhydride-modified propylene/1-butene copolymer, and then the maleic anhydride-modified propylene/1-butene copolymer was filtered, washed with acetone, and then dried under vacuum.

The maleic anhydride-modified propylene/1-butene copolymer had a melting point of 75.8°C. The maleic anhydride-modified propylene/1-butene copolymer had a heat of fusion of 28.6J/g, which was measured in conformity to JIS K7122. The maleic anhydride-modified propylene/1-butene copolymer had a weight-average molecular weight of 100000, which was measured by a GPC method and converted into the standard polystyrene. In the maleic anhydride-modified propylene/1-butene copolymer, the modification amount (introduction amount) of the monomer was 1% by mass. The above-described modification amount was determined by $^1$H-NMR determination.

<Production of Non-crystalline Hydrocarbon-based Polymer>

Production Example 2

A sufficiently nitrogen-substituted continuous polymerization reactor with a stirring blade was charged with one liter of dehydrated purified hexane, and then a hexane solution of ethyl aluminum sesquichloride (Al $(C_2H_5)_{1.5}$ Cl$_{1.5}$) adjusted to 96 mmol/L was continuously fed thereto at a rate of 500 ml/hour for one hour. Thereafter, a hexane solution of VO $(OC_2H_5)$ C$_{12}$ adjusted to 16 mmol/l as a catalyst was continuously fed thereto at a rate of 500 ml/hour, and hexane at a rate of 500 ml/hour. On the other hand, the polymerized liquid was continuously taken out of the upper part of the polymerization reactor so that the polymerized liquid in the polymerized liquid chamber is constantly kept one liter. Next, using a bubbling tube, ethylene gas was supplied at a rate of 47L/hour, propylene gas at a rate of 47L/hour, and hydrogen gas at a rate of 20L/hour. The copolymerization reaction was carried out at 35°C by circulating a refrigerant through a jacket attached to the outside of the polymerization reactor. The obtained polymerized solution was supplied with hydrochloric acid to remove the catalyst therefrom, thereafter charged into a large amount of methanol to precipitate, and then dried under reduced pressure at 130°C for 24 hours. In this manner, an ethylene/propylene copolymer was produced.

The ethylene content of the ethylene/propylene copolymer was 55.9 mol%. The above-described content was determined by $^{13}$C-NMR determination. The ethylene/propylene copolymer had a weight-average molecular weight of 14000. The ethylene/propylene copolymer had a kinematic viscosity at 200°C of 132 cSt, which was measured in conformity to JIS K 2283.

<Preparation of Adhesive Composition>

Example 1

[Preparation of Resin Composition]

100 parts by mass of the crystalline modified olefin polymer of Production Example 1 and 320 parts by mass of methylcyclohexane were blended in a flask with a stirring blade to which a Dean Stark apparatus was attached, and the mixture was stirred under reflux conditions for 3 hours to dissolve the crystalline modified olefin polymer of Production Example 1. Thereafter, the mixture was cooled to 60°C, and then 80 parts by mass of ethyl acetate was blended thereto. In this manner, a varnish (a solid content concentration of 20% by mass) of the resin composition was prepared. The resin composition has an acid value of 7.5 KOHmg/g.

[Preparation of Adhesive Composition]

100 parts by mass of the resin composition, an acid anhydride monomer (50 parts by mass of a solution in which 0.3 parts by mass of PMDA was dissolved in 49.7 parts by mass of ethyl acetate), a cross-linking agent (50 parts by mass of a solution in which 10 parts by mass of jER152 is dissolved in 40 parts by mass of ethyl acetate), and a catalyst (8.0 parts by mass of a solution in which 0.8 parts by mass of DBU was dissolved in 7.2 parts by mass of ethyl acetate) were mixed together to prepare an adhesive composition.

Examples 2 to 8 and Comparative Examples 1 to 3

An adhesive composition was prepared based on the same manner as in Example 1. However, in the preparation of the resin composition in Examples 5 and 6, the crystalline modified olefin polymer of Production Example 1, the non-crystalline hydrocarbon-based polymer of Production Example 2 or Production Example 3, and 320 parts by mass of methylcyclohexane were blended in a flask with a stirring blade to which a Dean Stark apparatus was attached, and the mixture was stirred under reflux conditions for 3 hours to dissolve them. Thereafter, the mixture was cooled to 60°C, and 80 parts by mass of ethyl acetate was blended therein. In this manner, an adhesive composition was prepared.

<Evaluation>

[Acid Value]

To a conical flask, 35 ml of toluene and 15 ml of n-butanol were added, and 0.8 g of a dilute solution obtained by diluting 0.1 g of a special-grade bromothymol blue with 100 ml of 19% ethanol was further added thereto to prepare a solution. Next, to the solution, an N/KOH-ethanol solution was added until the solution had a green color, and then the varnish of the resin composition and the varnish of the adhesive composition of each of Examples and Comparative Examples were added each in the amount of 5g and completely dissolved. Then, the solution was titrated with an N/KOH-ethanol solution until the solution had a blue color, and the titer was measured, and the acid value was calculated based on the following equation (1). The results are shown in Table 1.

$$\text{Acid Value (KOHmg/g)} = (\text{Titer of Sample} \times \text{Factor} \times 5.61)/\text{Sample Weight} \quad (1)$$

The sample weight is the weight of the solid content in the varnish of the resin composition.

[Adhesion during Low-temperature Lamination Process]

The adhesive composition of each Example and Each Comparative Example was applied onto the other surface of the aluminum foil as a substrate in the thickness direction, and dried at 120°C for 30 seconds (a dry film thickness of about 3 μm). In this manner, the first adhesive layer was disposed (formed) on the other surface of the aluminum foil in the thickness direction, thereby producing a laminate. Next, the other surface of the first adhesive layer in the thickness direction and the corona-treated surface of the CPP film (a thickness: 30 μm) as the inner layer were bonded to each other on a hot plate at 60°C. Thereafter, the laminate was aged at 60°C for 3 days. In this manner, a packaging material was produced.

The produced packaging material was cut into a width of 15 mm to prepare a test piece, and the test piece was subjected to a 180° peel test at a crosshead speed of 50mm/minute under a 23°C atmosphere using a universal tensile measuring device to measure the peel strength of the aluminum foil/CPP. The results are shown in Table 1. Further, the adhesion under a 23°C atmosphere was evaluated based on the following criteria. The results are shown in Table 1.

(Criteria)

◎: The peel strength of the aluminum foil/CPP was 11N/15mm or more.
○: The peel strength of the aluminum foil/CPP was 9N/15mm or more and less than 11N/15mm.
✕: The peel strength of the aluminum foil/CPP was less than 9N/15mm.

[Heat Resistance]

The test piece was subjected to a 180° peel test at a crosshead speed of 50mm/minute at a 120°C atmosphere using a universal tensile measuring device to measure the heat resistance of the aluminum foil/CPP. Further, the adhesion under a 120°C atmosphere was evaluated based on the following criteria. The results are shown in Table 1.

(Criteria)

◎: The peel strength of the aluminum foil/CPP was 3N/15mm or more.
○: The peel strength of the aluminum foil/CPP was 2N/15mm or more and less than 3N/15mm.
✕: The peel strength of the aluminum foil/CPP was less than 2N/15mm.

[Pot Life]

The adhesive composition of each of Examples and Comparative Examples was placed in a 50 cc vial and immersed in a water bath at 25°C. The viscosity 30 minutes after the immersion (initial viscosity) and the viscosity 24 hours after the immersion were measured, and the thickening ratio was calculated based on the following formula (3).

$$\text{Thickening ratio (\%)} = \text{Viscosity 24 Hours after Immersion/Initial Viscosity} \times 100 \quad (3).$$

The pot life was evaluated based on the following criteria. The results are shown in Table 1.

(Criteria)

◎: The thickening rate was 105% or less.
○: The thickening ratio was more than 105% and 130% or less.
✕: The thickening ratio exceeded 130%.

<Consideration>

It is found that Examples 1 to 8 including an acid anhydride monomer having a ring structure and two acid anhydride groups exhibit excellent adhesion during a low-temperature lamination process and excellent heat resistance as compared with Comparative Example 1 including no acid anhydride monomer, and Comparative Example 2 including an acid anhydride monomer (specifically, TH) having a ring structure and one acid anhydride group.

Further, it is found that the heat resistance is reduced in Comparative Example 3 using an isocyanate compound as a cross-linking agent, while excellent adhesion during a low-temperature lamination process and excellent heat resistance are achieved in Examples 1 to 8 each using an epoxy compound or an oxazoline compound as a cross-linking agent.

[Table 1]

Table 1

| Ex. · Comp.Ex. No. | | | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 |
|---|---|---|---|---|---|---|---|---|---|---|---|---|---|---|
| Adhesive composition | Resin composition | Crystalline modified olefin polymer | Prod. Ex.1 | 100 | 100 | 100 | 100 | 80 | 80 | 100 | 100 | 100 | 100 | 100 |
| | | Non-crystalline hydrocarbon-based polymer — Non-crystalline hydrocarbon-based synthetic oil | Prod. Ex. 2 | – | – | – | – | 20 | – | – | – | – | – | – |
| | | Non-crystalline hydrocarbon-based polymer — Non-crystalline hydrocarbon-based semi-solid resin | OPPANOL B12SFN | – | – | – | – | – | 20 | – | – | – | – | – |
| | Acid value (KOHmg／g) | | | 7.5 | 7.5 | 7.5 | 7.5 | 6.0 | 6.0 | 7.5 | 7.5 | 7.5 | 7.5 | 7.5 |
| | Acid anhydride monomer | | PMDA | 0.3 | 2.0 | – | – | 2.0 | 2.0 | 2.0 | 2.0 | – | – | 2.0 |
| | | | BISDA | – | – | 2.0 | – | – | – | – | – | – | – | – |
| | | | TMEG-100 | – | – | – | 2.0 | – | – | – | – | – | – | – |
| | | | TH | – | – | – | – | – | – | – | – | – | 2.0 | – |
| | Cross-linking agent | | jER152 | 10 | 10 | 10 | 10 | 10 | 10 | 10 | – | 10 | 10 | – |
| | | | RPS-1005 | – | – | – | – | – | – | – | 10 | – | – | – |
| | | | D-170N | – | – | – | – | – | – | – | – | – | – | 10 |
| | Catalyst | | DBU | 0.8 | 0.8 | 0.8 | 0.8 | 0.8 | 0.8 | – | – | 0.8 | 0.8 | – |
| | | | TPP | – | – | – | – | – | – | 0.8 | – | – | – | – |
| | Acid value (KOHmg／g) | | | 11.8 | 21.6 | 12.3 | 12.9 | 20.1 | 20.1 | 21.6 | 21.6 | 7.5 | 14.8 | 21.6 |
| | Acid anhydride monomer/monomer (molar ratio) | | | 0.7 | 4.7 | 1.6 | 1.8 | 5.9 | 5.9 | 4.7 | 4.7 | – | 2.4 | 4.7 |
| Evaluations | Adhesion during low-temperature lamination process | Peel strength (N/15mm) | | 10.0 | 11.9 | 9.7 | 9.4 | 10.8 | 11.0 | 9.3 | 9.1 | 8.4 | 7.7 | 13.2 |
| | | Evaluations | | ○ | ◎ | ○ | ○ | ○ | ◎ | ○ | ○ | × | × | ◎ |
| | Heat resistance | Peel strength (N/15mm) | | 2.6 | 3.4 | 2.7 | 2.5 | 2.3 | 2.5 | 2.3 | 2.2 | 1.9 | 1.7 | 0.5 |
| | | Evaluations | | ○ | ◎ | ○ | ○ | ○ | ○ | ○ | ○ | × | × | × |
| | Pot life | Initial viscosity(mPa·s) | | 72.3 | 93.7 | 85.5 | 79.5 | 46.7 | 58.1 | 87.2 | 88.1 | 196.4 | 81.5 | 72.7 |
| | | Thickening rate (%) | | 112 | 123 | 118 | 120 | 100 | 100 | 103 | 100 | 137 | 106 | 162 |
| | | Evaluations | | ○ | ○ | ○ | ○ | ◎ | ◎ | ◎ | ◎ | × | ○ | × |

17

While the illustrative embodiments of the present invention are provided in the above-described description, such is for illustrative purpose only and it is not to be construed as limiting in any manner. Modification and variation of the present invention that will be obvious to those skilled in the art is to be covered by the following claims.

Industrial Applicability

The adhesive composition, laminate, packaging material, and packaging material for battery cases of the present invention are preferably used, for example, in the production of packaging materials for lithium battery cases.

Description of Reference Numerals

1 First adhesive layer
2 Substrate
3 Inner layer
4 Second adhesive layer
5 Outer layer
10 Laminate
20 Packaging material
31 Packaging material for battery cases

**Claims**

1.  An adhesive composition comprising:

    a crystalline modified olefin polymer;
    an acid anhydride monomer; and
    a cross-linking agent,
    wherein the crystalline modified olefin polymer is obtained by modifying a crystalline $\alpha$-olefin polymer having 2 to 20 carbon atoms with a monomer having a functional group capable of reacting with an epoxy group or an oxazoline group,
    wherein the acid anhydride monomer has a ring structure and two or more acid anhydride groups, and
    wherein the cross-linking agent includes an epoxy compound and/or an oxazoline compound.

2.  The adhesive composition according to claim 1, further comprising a non-crystalline hydrocarbon-based polymer having a kinematic viscosity at 200°C of 1 cSt or more and 100000 cSt or less.

3.  The adhesive composition according to claim 2,
    wherein the non-crystalline hydrocarbon-based polymer is a polymer of an olefin having 2 to 20 carbon atoms.

4.  The adhesive composition according to claim 1, further comprising a catalyst.

5.  The adhesive composition according to claim 4,
    wherein the catalyst is an amine catalyst.

6.  The adhesive composition according to claim 1,
    wherein the functional group is an acid anhydride group.

7.  A laminate comprising: a first adhesive layer made of the adhesive composition according to any one of claims 1 to 6; and a substrate in order toward one side in a thickness direction.

8.  A packaging material comprising: an inner layer; and the laminate according to claim 7 in order toward one side in the thickness direction.

9.  A packaging material for battery cases comprising: the packaging material according to claim 8; a second adhesive layer; and an outer layer in order toward one side in the thickness direction.

FIG. 1

One side

Thickness
direction

The other side

— 2

— 1

10

FIG. 2A

One side

Thickness
direction

The other side

— 2

FIG. 2B

— 2

— 1

**FIG. 3**

One side
Thickness direction
The other side

20

**FIG. 4**

30

## INTERNATIONAL SEARCH REPORT

| International application No. |
|---|
| **PCT/JP2023/032070** |

**A. CLASSIFICATION OF SUBJECT MATTER**

***C09J 123/26***(2006.01)i; ***B32B 7/12***(2006.01)i; ***B32B 15/085***(2006.01)i; ***C09J 11/06***(2006.01)i; ***H01M 50/105***(2021.01)i;
***H01M 50/121***(2021.01)i; ***H01M 50/129***(2021.01)i
FI: C09J123/26; B32B7/12; B32B15/085 A; C09J11/06; H01M50/105; H01M50/121; H01M50/129

According to International Patent Classification (IPC) or to both national classification and IPC

**B. FIELDS SEARCHED**

Minimum documentation searched (classification system followed by classification symbols)

C09J123/26; B32B7/12; B32B15/085; C09J11/06; H01M50/105; H01M50/121; H01M50/129

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/131591 A1 (DIC CORPORATION) 04 July 2019 (2019-07-04)<br>claims, examples | 1-9 |
| A | WO 2021/106849 A1 (TOYOBO CO., LTD.) 03 June 2021 (2021-06-03)<br>claims, paragraph [0029], examples, comparative examples | 1-9 |
| A | WO 2018/030050 A1 (TOYOBO CO., LTD.) 15 February 2018 (2018-02-15)<br>claims, examples | 1-9 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 November 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/032070**

| Patent document cited in search report | | | Publication date (day/month/year) | Patent family member(s) | | | Publication date (day/month/year) |
|---|---|---|---|---|---|---|---|
| WO | 2019/131591 | A1 | 04 July 2019 | JP | 2020-29561 | A | |
| | | | | claims, examples | | | |
| | | | | CN | 111479889 | A | |
| | | | | TW | 201937780 | A | |
| WO | 2021/106849 | A1 | 03 June 2021 | US | 2022/0416334 | A1 | |
| | | | | claims, paragraph [0043], examples, comparative examples | | | |
| | | | | EP | 4067451 | A1 | |
| | | | | CN | 114761508 | A | |
| | | | | KR | 10-2022-0104032 | A | |
| | | | | TW | 202128920 | A | |
| WO | 2018/030050 | A1 | 15 February 2018 | JP | 6278167 | B1 | |
| | | | | claims, examples | | | |
| | | | | CN | 109476969 | A | |
| | | | | KR | 10-2019-0038844 | A | |
| | | | | TW | 201823406 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018030050 A
- JP 3939464 B
- WO 200487775 A